# DEMANDE DE BREVET EUROPEEN

(11) **EP 1 686 667 A1**
(43) Date de publication de la demande: **02.08.2006**
(21) Numéro de dépôt: 05300064.2
(22) Date de dépôt: 27.01.2005
(51) Int. Cl.: H02G 1/10, H02G 1/06, H02G 15/26

(54) **Procédé pour éviter la pollution due à une éventuelle fuite d'huile contenue dans un câble électrique**

(71) Demandeur: Nexans, 75008 Paris (FR)
(72) Inventeur: Dardel, Boris, 2035, Corcelles (CH); Gehret, Sébastien, 2017, Boudry (CH); Jaquenod, Laurent, 2017, Boudry (CH); Kraehenbuehl, Laurent, 2013, Colombier (CH); Mattmann, John Peter, 2014, Bole (CH)
(74) Mandataire: Lenne, Laurence

(57) **Abrégé**

L'invention concerne un procédé pour éviter la pollution due à une éventuelle fuite d'huile contenue dans un tronçon de câble électrique de puissance (10).
Le procédé comporte les opérations suivantes : injection d'un liquide dans le câble dudit tronçon à partir de l'une de ses deux extrémités (16, 18), rinçage du câble du tronçon à l'aide du liquide et récupération du liquide et de l'huile à l'autre des deux extrémités (16 ou 18) du tronçon. Le liquide peut avantageusement être un solvant. Dans ce cas, un liquide non polluant est injecté dans le câble afin de remplacer le solvant par le liquide non polluant.

L'invention s'applique notamment au domaine des câbles électriques enterrés et sous-marins.

## Description

La présente invention a pour objet un procédé pour éviter la pollution due à une éventuelle fuite d'huile contenue dans un tronçon inutilisé de câble électrique de puissance.

Les câbles électriques de puissance sont souvent enfouis dans le sol, à une profondeur telle qu'ils ne présentent pas de danger d'électrocution, ou posés directement au fond d'une étendue d'eau, par exemple une mer, une rivière ou un lac. Ces câbles peuvent ne plus être utilisés pour diverses raisons : vieillissement, claquage du câble, remplacement par un câble plus approprié (en cas d'agrandissement d'un quartier par exemple), évolution de la technologie, etc....Les câbles non utilisés sont le plus souvent abandonnés, enfouis dans le sol ou au fond d'une étendue d'eau.

Les câbles électriques de puissance contiennent depuis de très nombreuses années une huile dont la fonction est d'isoler électriquement le ou les conducteurs électriques des autres composants du câble, notamment de son écran extérieur. Les câbles non utilisés présentent donc un risque de pollution de l'environnement en cas de fuite de l'huile qu'ils contiennent.

La solution évidente pour supprimer le risque consiste à enlever les câbles non utilisés. Cependant, cette solution n'est pas toujours possible et peut être onéreuse car elle peut nécessiter de mobiliser des moyens importants, par exemple pour retirer un câble reposant au fond d'une étendue d'eau. L'opération peut aussi être compliquée ou même impossible, par exemple pour excaver un câble enterré en milieu urbain. L'opération présente également des risques car ces câbles non utilisés sont la plupart du temps âgés et une rupture du câble, donc une fuite de l'huile qu'ils contiennent, est à redouter.

La présente invention propose une solution pour résoudre ce problème technique. L'idée directrice consiste à enlever l'huile contenue dans le câble inutilisé. Pour cela, un liquide est injecté dans le câble afin de le rincer ce qui a pour effet d'éliminer l'huile, au moins partiellement. Le liquide peut être de l'eau ou un solvant. Dans ce dernier cas, le solvant peut être, soit injecté de façon continue dans le câble pour le rincer, soit injecté et laissé dans le câble pendant un certain temps afin de dissoudre l'huile, le câble étant ensuite rincé avec le solvant. Ce dernier peut ensuite être avantageusement remplacé par un liquide non polluant pour l'environnement.

De façon plus précise, l'invention concerne un procédé pour éviter la pollution due à une éventuelle fuite d'huile contenue dans un tronçon de câble électrique de puissance non utilisé. Le procédé comporte les opérations suivantes :
- injection d'un liquide dans le câble dudit tronçon à partir de l'une de ses deux extrémités ; et
- rinçage du câble dudit tronçon à l'aide du liquide et récupération du liquide et de l'huile à l'autre des deux extrémités du tronçon.

Selon un mode de mise en oeuvre, le liquide est injecté en continu à l'une des extrémités du tronçon de câble et récupéré avec de l'huile, en continu, à l'autre extrémité. Le liquide est avantageusement un solvant ou de l'eau.

Selon un autre mode de mise en oeuvre, le liquide est un solvant et le procédé comporte les opérations suivantes :
- injection du solvant dans le câble du tronçon à l'une de ses deux extrémités;
- dissolution, au moins partielle, de l'huile présente dans le câble du tronçon en laissant agir le solvant pendant une période de temps déterminé; et
- à la fin de ladite période de temps, rinçage du câble du tronçon à l'aide du solvant et récupération du solvant contenant de l'huile dissoute à l'autre des deux extrémités du tronçon.

Selon un mode de réalisation avantageux, le solvant contenu dans le câble du tronçon est remplacé par un liquide non polluant qui est injecté dans le câble à l'une des deux extrémités du tronçon.

Afin d'enlever une quantité d'huile suffisante, les opérations de dissolution de l'huile, de rinçage et de récupération de l'huile dissoute peuvent être répétées plusieurs fois.

La quantité d'huile éliminée du câble est avantageusement mesurée et les opérations de dissolution de l'huile et de rinçage sont répétées tant que la quantité d'huile éliminée n'est pas égale ou supérieure à une quantité déterminée.

Le solvant peut être un solvant organique, tel que l'alcool isopropylique et le liquide non polluant remplaçant le solvant est avantageusement de l'eau.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- la figure 1 montre un câble électrique immergé au fond d'une étendue d'eau;
- la figure 2 est une coupe transversale d'un exemple de câble électrique de puissance; et
- la figure 3 illustre un dispositif permettant d'injecter un liquide dans le câble.

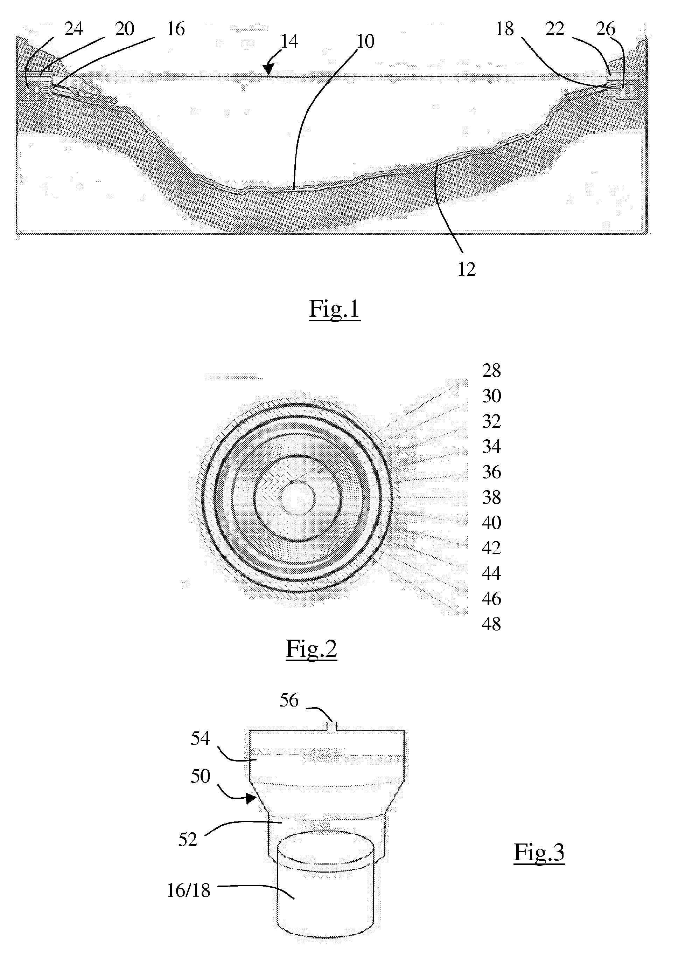

Sur la figure 1, un tronçon inutilisé 10 de câble électrique de puissance repose sur le fond 12 d'un lac 14. Le tronçon se termine à ses deux extrémités 16 et 18 à l'intérieur de deux chambres respectivement 20 et 22. Ces chambres permettent d'accéder aux deux extrémités 16 et 18 du tronçon de câble. Les extrémités 16 et 18 du tronçon 10 sont reliées au câble par deux raccords respectivement 24 et 26.

La figure 2 représente, en coupe, un câble électrique de puissance. Ce câble comporte de façon classique un conduit central 28 formé par une spirale. Un conducteur électrique 30, en cuivre ou en aluminium, entoure le conduit central. Puis, en partant du conducteur 30 vers l'extérieur, on trouve successivement un premier écran 32 du conducteur, une isolation électrique 34 réalisée en papier entourant l'écran 32, un deuxième écran 36, un ruban en coton métallisé 38 enroulé autour du deuxième écran, une gaine 40 réalisée en aluminium (ou en plomb ou en cuivre) ondulé sans soudure, un enrobage 42 en polyester et bitume, une gaine 44 en PVC ou en PE (polyéthylène), une autre gaine 46 en Nylon et un enrobage 48 anti-termite lorsque le câble est destiné à être enterré dans le sol.

D'autres structures de câble existe, notamment des câbles à trois conducteurs pour le transport du courant triphasé. Ils contiennent également de l'huile comme isolant électrique et l'invention s'applique de la même façon à ces autres structures.

Une huile fluide, isolante électriquement, remplit le conduit central 28 et imprègne le papier de l'isolant 34. L'huile est en général minérale ou synthétique, du type couramment utilisé en électrotechnique. L'huile a pour fonction de contribuer, avec l'isolant papier 34, à l'isolation électrique du conducteur 30. Le conduit central, de diamètre compris par exemple entre 10 et 15 mm, est en communication avec des réservoirs d'expansion d'huile contenus dans les chambres d'extrémités 20 et 22. En cas de variations de température, l'huile peut ainsi fluer librement dans la partie centrale du câble sans créer une augmentation de pression dommageable pour le câble.

Selon le procédé de l'invention, un liquide est injecté à l'une des deux extrémités 16 et 18 du tronçon de câble 10, à partir de l'une des deux chambres d'accès 24 et 26. Le liquide peut être injecté en continu dans le câble et récupéré en continu à l'autre extrémité du tronçon de câble, dans l'autre chambre d'accès. Le câble est donc rincé par le liquide lequel entraîne l'huile, au moins en partie, hors du câble. Le liquide peut être par exemple de l'eau ou un solvant. Dans ce dernier cas, il est possible de laisser le solvant dans le câble pendant une certaine période de temps de façon à ce qu'il dissolve tout ou partie de l'huile, le solvant avec l'huile dissoute étant récupéré à l'autre extrémité du tronçon de câble à la fin de la période de temps. Le solvant utilisé doit être miscible avec l'huile, par exemple un solvant organique et plus spécialement l'alcool isopropylique ou éthylique. Lorsque le solvant est remplacé dans le câble par un liquide non polluant (de l'eau par exemple), comme indiqué ci-après, le solvant peut aussi avantageusement être compatible avec ce liquide.

L'injection du solvant, et éventuellement d'un autre liquide, peut se faire par tous moyens appropriés, par exemple avec le dispositif illustré sur la figure 3. L'une des deux extrémités 16 ou 18 du câble est connectée de façon étanche à un récipient 50 ayant une forme cylindrique 52, pour la partie connectée au câble, suivie par une forme évasée 54. Le récipient est muni d'une ouverture 56 par laquelle un liquide peut être injecté, afin de remplir le récipient 50 et de se répandre à l'intérieur du câble, et plus spécialement dans le conduit central 28 et dans le papier de l'isolant 34. Le fluide peut être injecté sous pression ou par gravité.

Le solvant injecté est laissé dans le câble pendant une période de temps suffisante pour dissoudre la plus grande quantité d'huile possible. Cette période varie de quelques heures à quelques semaines, dépendant principalement de la quantité d'huile dans le câble et de la longueur du câble, donc de la structure du câble, et de la température (la viscosité de l'huile changeant avec la température). Après cette période, le tronçon de câble est rincé en injectant à nouveau du solvant à l'une des extrémités 16 ou 18 et en récupérant le solvant avec l'huile dissoute à l'autre extrémité. La quantité de solvant injectée pour le rinçage est légèrement supérieure à la quantité de solvant contenue dans le câble. De préférence, on mesure alors la quantité d'huile contenue dans le solvant (quantité d'huile éliminée du câble) à la fin de l'opération de rinçage. Cette mesure peut être par exemple une mesure calorimétrique ou spectrométrique, une mesure de l'indice de réfraction ou toute autre méthode appropriée. Si la quantité d'huile éliminée est jugée trop faible, on laisse à nouveau agir le solvant pendant une certaine période de temps, qui à nouveau peut être de quelques heures à quelques semaines. La quantité d'huile restant dans le câble peut être calculée à partir de la quantité mesurée d'huile éliminée du câble. Au bout de cette période, le câble est à nouveau rincé en injectant du solvant. Une mesure de quantité d'huile éliminée et un calcul de quantité d'huile restant dans le câble sont à nouveau effectués. L'opération d'injection de solvant et de rinçage est répétée jusqu'à ce que la quantité d'huile restante soit égale ou inférieure à un seuil déterminé. Ce seuil correspond généralement à une absence totale ou acceptable de risque de pollution par une fuite de l'huile restant dans le câble.

Au lieu de laisser le solvant agir dans le câble pendant une certaine période de temps, il est également possible d'effectuer un rinçage en continu avec le solvant.

Si le solvant ne présente pas de risque d'accident pour les personnes et/ou l'environnement, il peut être laissé dans le câble. Si ce n'est pas le cas, par exemple si le solvant est un alcool inflammable, le tronçon de câble 10 est rincé avec un liquide non polluant, ne présentant pas de risque aussi bien pour les personnes que pour l'environnement. Le solvant est alors remplacé dans le câble par ce liquide, lequel peut être avantageusement de l'eau. La mise en oeuvre du rinçage avec l'eau est la même que pour le remplacement de l'huile par le solvant.

L'avantage principal du procédé qui vient d'être décrit est de pouvoir laisser en place les câbles électriques inutilisés, tout en supprimant ou en rendant négligeables les risques de fuites de l'huile contenue dans ces câbles. La mise en oeuvre du procédé est relativement aisée, bon marché et sans risque comparée à l'opération qui consiste à retirer le câble.

## Revendications

1. Procédé pour éviter la pollution due à une éventuelle fuite d'huile contenue dans un tronçon inutilisé de câble électrique de puissance (10), **caractérisé en ce qu'**il comporte les opérations suivantes :
- injection d'un liquide dans le câble dudit tronçon à partir de l'une de ses deux extrémités (16, 18); et
- rinçage du câble dudit tronçon à l'aide du liquide et récupération du liquide et de l'huile à l'autre des deux extrémités (16 ou 18) du tronçon.

2. Procédé selon la revendication 1 **caractérisé en ce que** ledit liquide est injecté en continu à l'une des extrémités du tronçon de câble et récupéré avec de l'huile à l'autre extrémité du tronçon de câble.

3. Procédé selon la revendication 2 **caractérisé en ce que** ledit liquide est de l'eau.

4. Procédé selon la revendication 2 **caractérisé en ce que** ledit liquide est un solvant.

5. Procédé selon la revendication 1 **caractérisé en ce que** ledit liquide est un solvant et **en ce qu'**il comporte les opérations suivantes :
- injection dudit solvant dans le câble dudit tronçon à l'une de ses deux extrémités (16, 18);
- dissolution, au moins partielle, de l'huile présente dans le câble dudit tronçon en laissant agir ledit solvant pendant une période de temps déterminé; et
- à la fin de ladite période de temps, rinçage du câble dudit tronçon à l'aide du solvant et récupération du solvant contenant de l'huile dissoute à l'autre des deux extrémités (16, 18) du tronçon.

6. Procédé selon la revendication 5 **caractérisé en ce que** les opérations d'injection de solvant, de dissolution de l'huile, de rinçage et de récupération de l'huile dissoute sont répétées plusieurs fois.

7. Procédé selon l'une des revendications précédentes **caractérisé en ce que** la quantité d'huile éliminée du câble dudit tronçon est mesurée.

8. Procédé selon les revendications 6 et 7 **caractérisé en ce que** les opérations d'injection de solvant, de dissolution de l'huile et de rinçage sont répétées tant que la quantité d'huile éliminée n'est pas égale ou supérieure à une quantité déterminée.

9. Procédé selon la revendication 4 ou 5 **caractérisé en ce qu'**un liquide non polluant est injecté dans le câble (10) à l'une des deux extrémités (16, 18) dudit tronçon afin de remplacer le solvant présent dans le câble par le liquide non polluant.

10. Procédé selon la revendication 4 ou 5 **caractérisé en ce que** ledit solvant est un solvant organique.

11. Procédé selon la revendication 10 **caractérisé en ce que** ledit solvant est de l'alcool isopropylique.

12. Procédé selon la revendication 9 **caractérisé en ce que** ledit liquide non polluant est de l'eau.
